# EUROPÄISCHE PATENTSCHRIFT

(11) **EP 2 695 923 B1**
(45) Veröffentlichungstag und Bekanntmachung des Hinweises auf die Patenterteilung: **04.07.2018**
(21) Anmeldenummer: 13179164.2
(22) Anmeldetag: 02.08.2013
(51) Int. Cl.: C09J 5/00, G06F 3/041, B32B 37/00

(54) **Verfahren zur durchsichtigen Verklebung von transparenten Schichten**
Method for transparent bonding of transparent layers
Procédé de collage transparent de couches transparentes

(30) Priorität: 07.08.2012 DE 102012015458; 17.12.2012 DE 102012112385; 17.12.2012 DE 102012112386
(43) Veröffentlichungstag der Anmeldung: 12.02.2014
(73) Patentinhaber: PiOptix GmbH, 90411 Nürnberg (DE)
(72) Erfinder: Schuster, Dr. Thomas, 91207 Lauf (DE); Piotrowski, Frank, 90513 Zirndorf (DE)
(74) Vertreter: Hannke, Christian

(56) Entgegenhaltungen:
- EP-A1- 0 789 295
- EP-A1- 1 973 089
- WO-A1-2009/037886
- WO-A1-2012/086591
- DE-A1-102011 005 378
- US-A1- 2008 216 952
- US-A1- 2008 261 057
- US-A1- 2011 155 317

## Beschreibung

Die Erfindung betrifft Verfahren zur durchsichtigen Verklebung von transparenten Schichten und sich daraus ergebende Erzeugnisse, insbesondere Displays für Mobiltelefone.

Der Begriff »Optical Bonding« bedeutet »transparente Flüssigverklebung« und steht für eine Klebetechnik, die optische Komponenten wie etwa Displayeinheiten, Eingabeeinheiten, wie zum Beispiel Touch-Träger oder Frontglas, mit einer besonders hohen optischen Qualität miteinander verbindet. "Transparent" heißt, dass ein derartiges Material für elektromagnetische Strahlung, insbesondere im sichtbaren Bereich des Welllängenspektrums der elektromagnetischen Strahlung, zumindest zu 80 %, bevorzugt zu mehr als 90 %, durchlässig ist.

Optisch gebondete Displays sind bekannt bei militärischen Ausstattungen, besonders in Bordinstrumenten von Flugzeugen und Schiffen. Gute Ablesbarkeit der Instrumente bei Sonneneinstrahlung, Reduzierung unerwünschter Blendeffekte und Spiegelungen sowie Vermeidung von Kondensation in den Anzeigeelementen bei wechselnden Umgebungsbedingungen sind hier die wichtigsten Kriterien für die Anwendung.

Insbesondere hat die Einführung von immer leistungsfähigeren, auch industrietauglichen Displayeinheiten mit Multitouch-fähiger PCT-Technologie (Projected Capacitive Touch) dem optischen Bonding zum heutigen Bekanntheitsgrad verholfen: Erwähnt sei hier der iPhone-Effekt. Hierbei wird ein (in anderen Geräten vorhandener Luftspalt) durch optisches Bonding "aufgefüllt".

Die Besonderheit liegt darin, dass hochtransparente, indexangepasste Klebstoffe (Brechungsindex Glas: 1,51, Brechungsindex Luft: 1,0, beispielsweise Brechungsindex Klebstoffsystem = Glas verwendet werden. Insbesondere weichen die beiden Brechungsindizes nur gering voneinander ab und halten sich jeweils in einem Bereich von wenigstens 1,45 bis höchstens 1,55 auf.) verwendet werden, um im Gesamtverbund eine möglichst klare Darstellung der Anzeigeelemente auch bei ungünstigen Lichtverhältnissen zu erzielen. Zusätzlich ist die Verklebung speziell auf die Anforderungen neuer, immer besser auflösender Displayeinheiten ausgerichtet. Die von Reflexionen an den Grenzflächen verursachten optischen Verluste werden durch indexangepasste Klebstoffe so sehr reduziert, dass Kontrastverhältnis und Lichtausbeute messbar verbessert werden können. Ein weiterer Vorteil ist die hohe Brillanz, die vor allem in Verbindung mit neuen, lichtstarken LED-Backlight-Displays erzielt wird. Der Einsatz von LEDs gestattet ein höheres maximales Kontrastverhältnis; Farben wirken intensiver und realistischer.

Das Ausfüllen des Luftspalts stellt sicher, dass sich zwischen Displayeinheit und Eingabeeinheit, also zum Beispiel zwischen Anzeigeelement und Frontglas oder Touchträger keine Lufteinschlüsse befinden, so dass auch mögliche Kondensationseffekte gänzlich ausgeschlossen sind.

Neben den optischen Vorteilen ermöglicht optisches Bonden einen robusteren Gesamtaufbau. Die fest miteinander verbundenen Glaskomponenten wirken wie Verbundsicherheitsglas und sind daher sehr widerstandsfähig gegenüber Vibrationen, thermischen Spannungen und Schockbelastungen.

Das Optical Bonding gilt wegen seiner langjährigen Anwendung in militärischen Produkten als etablierte Technologie. Mittlerweile ist eine breite Palette entsprechender Materialien ausreichend getestet und kommerziell verfügbar. Das Know-How der Verfahrenstechnik unterscheidet die wenigen Anbieter.

Prozesssichere Optical-Bonding-Verfahren, nach denen sich beispielsweise HMI-Touchpanels, luftblasenfrei und folglich mit besonders hoher optischer Qualität fertigen lassen, waren bisher für Standard-Anwendungen in der Industrie aufgrund hohen Personaleinsatzes und meist notwendiger Fügeschritte im Vakuum zu kostspielig.

Die EP 1 973 089 A1 zeigt ein Verkleben einer transparente Platte oder ein Touchpanel mit einem Flachbildschirm, ohne dass sich Luftblasen bilden. Eine festgelegte Menge flüssigen Klebstoffs wird punktweise auf eine Klebefläche, an Ecken und in der Mitte aufgetragen. Es wird Kleber aufgetragen, um die Punkte des aufgetragenen Klebers mit Linien zu verbinden. Die Klebefläche wird dann umgedreht, wodurch der aufgetragene Kleber anfängt zu tropfen und mit einer gegenüberliegenden Klebefläche in Kontakt gebracht wird, um so einen Spalt zwischen den Klebeflächen mit dem tropfenden Kleber auszufüllen. Die Aushärtung des Klebstoffs erfolgt durch Bestrahlung mit Licht, welches von einer transparenten Plattenseite einfällt. Kurz gesagt, nachdem Klebepunkte mit der gegenüberliegenden Klebefläche in Kontakt gebracht wurden und der Kleber in ein Muster fließt, das keine Luftblasen einlässt, wird der Spalt zwischen den Klebeflächen mit dem Kleber ausgefüllt.
Die US 2008/216952 A1 zeigt ein Klebeverfahren zum Ankleben einer ersten optischen Komponente an eine zweite optische Komponente, bei dem ein Harz auf einen ersten vorbestimmten Bereich der ersten optischen Komponente und einen zweiten vorbestimmten Bereich der zweiten optischen Komponente aufgebracht wird. Die ersten und zweiten vorbestimmten Bereiche werden so angeordnet, dass sie einander entsprechen und dann der Abstand zwischen den ersten und den zweiten vorbestimmten Bereichen verkürzt wird. Dies geschieht solange, bis eine Harzbrücke zwischen den ersten und zweiten optischen Komponenten gebildet wird und somit der Abstand zwischen den ersten und zweiten vorbestimmten Bereichen leicht verkürzt wird.

Die EP 0 789 295 A1 zeigt eine Anzeigeeinheit mit einem transparenten Berührungsschalter und einer Flüssigkristallanzeige, wobei der Berührungsschalter mit der Flüssigkristallanzeige durch den Raum zwischen der Anzeigefläche der Flüssigkristallanzeige und der gegenüberliegenden Fläche eines Eingabebereichs des Berührungsschalters mit einem klaren Klebstoff gefüllt ist, dadurch gekennzeichnet, dass der klare Klebstoff im Raum zwischen der Anzeigefläche und dem Eingabebereich des Berührungsschalters klare Füllstoffe enthält.

Die WO 2012/086 591 A1 zeigt ein Verfahren zum schnellen Auftragen und Verteilen von Klebstoff zwischen Substraten, ohne Luftblasen zu hinterlassen. Das Verfahren umfasst das Halten von zwei Substraten getrennt voneinander, wobei die Klebeseiten einander zugewandt sind, wobei ein zweites Substrat über einem ersten Substrat positioniert ist. Das zweite Substrat wird so aufgehängt, dass sich ein Teil zum ersten Substrat hin verformt. Nachdem ein flüssiger Füllstoff zwischen den beiden Substraten aufgetragen wurde, werden die Walzen auf das zweite Substrat abgesenkt und so bewegt, dass der flüssige Füllstoff zwischen dem ersten und dem zweiten Substrat dispergiert wird. Entsprechend dem Walzen der Walzen werden die Endbereiche des zweiten Substrats zum ersten Substrat hin abgesenkt. Die heutigen Probleme resultieren sowohl aus dem Klebstoffmaterial, als auch aus der Verfahrenstechnik. Eine der größten Herausforderungen ist das luftblasenfreie Verkleben optischer Materialien. Je nach Viskosität und Oberflächenspannung des Klebstoffs lösen sich die Luftblasen an der Oberfläche auf. Beim Fügen der Glasplatten können jedoch wieder Luftblasen eingeschlossen werden, die dann im weiteren Verlauf des Klebeprozesses nicht mehr entweichen können und zwischen den zu fügenden Werkstücken eingeschlossen bleiben, etwa zwischen beispielsweise einer Display-Oberfläche und einem Touchscreen oder zwischen Touchscreen und Frontglas. Eine einzige Luftblase macht ein gebondetes Display zu Ausschuss. Aus diesem Grund verzichten derzeit sehr viele Display-Hersteller auf den Optical-Bonding-Prozess und bieten ihre Produkte ohne die genannten optischen Vorteile an. Alternativ sind auch Lösungen mit gebondetem Touch auf Frontglas und Luftspalt zwischen Display und Touch erhältlich. Resistive Touchaufbauten lassen sich ohnehin nicht vollständig optisch bonden - zwischen Betätigungs- und Kontaktfläche ist aus technischen Gründen immer ein Luftspalt erforderlich. Solange jedoch noch eine Luftschicht im Gesamtaufbau enthalten ist, sind störende Reflektionen aufgrund der Übergänge Glas/Luft eingebaut und nicht beseitigt.

Demzufolge liegt der vorliegenden Erfindung die Aufgabe zugrunde, ein Verfahren zur durchsichtigen Verklebung von transparenten Schichten und Erzeugnisse, die sich hieraus ergeben, zur Verfügung zu stellen, bei denen ein luftblasenfreies Verkleben optischer Materialien möglich ist, sowie eine kostengünstige Anwendung eines derartigen Verfahrens und Herstellung der sich darauf ergebenden Erzeugnisse ermöglicht wird. Es ist zudem Aufgabe der Erfindung, durch ein derartiges Verfahren und die sich daraus ergebenden Erzeugnisse die optischen Eigenschaften eines Displays mit einer transparenten Touch-Einheit zu verbessern. Ebenso ist es Aufgabe der Erfindung, die Bildqualität derartiger Erzeugnisse, insbesondere elektronischer Geräte, die ein Display aufweisen, zu verbessern, wenn das Display mit einer transparenten Toucheinheit versehen ist.

Diese Aufgabe wird durch den Gegenstand des Anspruch 1 gelöst, wodurch die vorliegende Anmeldung auch den Anforderungen an Knappheit, Lesbarkeit und Einheitlichkeit genügt.

Um nun ein Verfahren zur durchsichtigen Verklebung von transparenten Schichten anzugeben, bei dem ein aushärtbarer, transparenter Kleber luftblasenfrei auf einem vorgebbaren Klebebereich der Eingabeeinheit verteilt wird, macht die vorliegende Erfindung in einer ersten Variante unter anderem von der Idee Gebrauch, in einem ersten Schritt den transparenten Kleber in noch flüssiger oder zähflüssiger Phase auf eine Verbindungsoberfläche an einer Oberseite der Displayeinheit aufzubringen. Mittels des Aufbringens des aushärtbaren, transparenten Klebers wird eine transparente Klebeschicht geformt. In einem nächsten Schritt wird die Displayeinheit um 180° um eine Wendeachse gedreht, wobei nach dem Drehen der Displayeinheit die transparente Klebeschicht nach unten zeigt und nach einer Umformung und einem zumindest teilweise durch die Schwerkraft verursachten Zusammenziehen der transparenten Klebeschicht, zu einer Tropfenform, die Verbindungsoberfläche und die darauf aufgebrachte transparente Klebeschicht auf einer Auflagefläche einer Eingabeeinheit zusammengefügt werden. Durch Einwirkung der Schwerkraft auf die Displayeinheit wird diese auf die darunterliegende Eingabeeinheit aufgepresst, wobei sich durch das Aufpressen die zwischen der Eingabeeinheit und der Displayeinheit angeordnete, transparente Klebeschicht luftblasenfrei auf den vorgebbaren Klebebereich der Eingabeeinheit verteilt.

"Nach unten" heißt in diesem Zusammenhang, dass nach der Drehung die Klebeschicht in Richtung der darunter angeordneten Eingabeeinheit zeigt.

Mit anderen Worten ermöglicht es die durch die Schwerkraft erzeugte Tropfenform des noch nicht ausgehärteten transparenten Klebers, dass sich ausgehend von einer Spitze des Tropfens im Moment des Zusammenfügens der Tropfen zentrisch und gleichmäßig zwischen der Displayeinheit und der Eingabeeinheit beispielsweise in Form einer Ausbreitungswelle verteilt. Eventuell während des Zusammenfügens entstehende Luftblasen werden durch ein derartiges Ausbreiten des in Tropfenform ausgebildeten Klebers herausgedrängt und/oder herausgepresst. Ein derartiges Zusammenfügen wirkt daher als ein automatischer Blasenentfernungsschritt, durch welchen das Ausbilden jeglicher Luftblasen ausgeschlossen werden kann. Eine daraus entstehende Displayvorrichtung ist daher eine Vorrichtung besonders hoher optischer Brillanz und kann gleichzeitig durch das hier beschriebene Verfahren besonders einfach und kostengünstig hergestellt werden.

Die Displayeinheit ist vorzugsweise vom Typ einer Flüssigkristallanzeige (LCD), eines Typs organisch leuchtender Dioden (OLED) oder vom Typ elektronisches Papier (e-paper). Dabei sind grundsätzlich zwei Bauweisen von LCD-Anzeigen handelsüblich: Variante 1 besteht aus einer rückseitigen Beleuchtungseinheit, der LCD-Einheit und einem Rahmen, der beide Komponenten umschließt. Variante 2 weist im Gegensatz zu Variante 1 keinen Rahmen auf.

Die transparente Touch-Einheit ist vorzugsweise vom Typ analog-resistiv, projektiv-kapazitiv oder Ultraschall-basiert.

Der gesamte Aufbau des Displays erfolgt durch das fachgerechte Einbringen eines transparenten Klebematerials, wie flüssigem Klebematerial, zwischen die transparenten Bausteine Displayeinheit und Toucheinheit. Auf diese Weise werden störende Reflexe weitgehend reduziert. Gegenüber dem Stand der Technik wird die Bildqualität wesentlich verbessert.

Das Verfahren macht zuverlässig luftblasenfreies Optical Bonding für übliche industrielle HMI-Anwendungen, insbesondere auch für kleine und mittelgroße Serien, möglich. Die Automatisierung in der Herstellung der hier beschriebenen Displayaufbauten ist z.B. heute für den flächendeckenden Einsatz in der Automobilindustrie zwingend notwendig. Zukünftige Automobile werden mit optisch gebondeten Displayeinheiten ausgerüstet sein. Die Vorteile wie optische Verbesserungen, höhere Kontraste der Anzeige und verbesserte mechanische Stabilität (bei Stoßbelastungen, Schockeinwirkung und Vibration) verhelfen dem optischen Bonding mehr und mehr zum Durchbruch.

Gemäß zumindest einer Ausführungsform wird zunächst bei dem hier beschriebenen Verfahren ein aushärtbarer, transparenter Kleber bereitgestellt. In einem nächsten Schritt wird der transparente Kleber in noch flüssiger oder zähflüssiger Phase auf eine Verbindungsoberfläche an einer Oberseite einer Displayeinheit aufgebracht, um eine transparente Klebeschicht zu formen. In einem nächsten Schritt wird die Displayeinheit um 180° um eine Wendeachse gedreht, wobei nach dem Drehen der Displayeinheit die transparente Klebeschicht nach unten zeigt und nach einer Umformung und einem zumindest teilweise durch die Schwerkraft verursachten Zusammenziehen der transparenten Klebeschicht zu einer Tropfenform die Verbindungsoberfläche und die darauf aufgebrachte transparente Klebeschicht auf einer Auflagefläche einer Eingabeeinheit zusammengefügt werden, wobei durch Einwirkung der Schwerkraft die Displayeinheit auf die darunterliegende Eingabeeinheit aufgepresst wird und sich durch das Aufpressen die zwischen der Eingabeeinheit und der Displayeinheit angeordnete transparente Klebeschicht luftblasenfrei auf einem vorgebbaren Klebebereich der Eingabeeinheit verteilt.

Gemäß zumindest einer Ausführungsform ist der aushärtbare, transparente Kleber mit einem additiv vernetzendem Zwei-Komponenten-Silikon und/oder einem UV-aushärtbaren Acrylat gebildet. Insbesondere kann dieses Zwei-Komponenten-Silikon mit einem UV-aushärtbaren Silikon und/oder einem additiv vernetzendem Silikon gebildet sein. Es hat sich überraschend gezeigt, dass ein derartiges Silikon zu einer besonders einfachen Eliminierung von Luftblasen während des Zusammenfügens führt und gleichzeitig dieses Silikon besonders einfach beispielsweise mittels einer Temperaturerhitzung aushärtbar ist, was insbesondere für ein nicht UV-aushärtbares System gelten kann.. Ist alternativ oder zusätzlich der aushärtebare, transparente Kleber mit dem UV-aushärtbaren Acrylat gebildet, so ermöglicht das Acrylat ein besonders schnelles Aushärten mittels Bestrahlung von elektromagnetischer Strahlung beispielsweise im ultravioletten Wellenlängenbereich. Sind sowohl das Silikon als auch das Acrylat in dem Kleber enthalten, können sich beide vorteilhafte Wirkungen ergänzen, so dass es sich bei einem derartigen Klebstoff um einen besonders einfach und schnell aushärtbaren Kleber handelt. In diesem Zusammenhang ist denkbar, dass die Aushärtung des Silikonsystems nicht im direkten Kontakt mit Acrylaten erfolgen kann.

Gemäß zumindest einer Ausführungsform weist der aushärtbare, transparente Kleber in flüssigem oder zähflüssigem Zustand eine Viskosität von wenigstens 300 mPas und höchstens 10.000 mPas auf. Mit einer in einem derartigen Bereich beanspruchten Viskosität und einer damit unmittelbar verbundenen Oberflächenspannung des auf die Verbindungsoberfläche aufgebrachten Klebers lösen sich beispielsweise eingeschlossene Luftblasen an der Oberfläche besonders einfach auf. Eine derartige Viskosität stellt zudem sicher, dass der noch flüssige oder zähflüssige Kleber weder zu schnell zerfließt und beispielsweise nach dem Drehen der Displayeinheit von dieser abtropft, noch, dass dieser andererseits zu zäh ist, um sich nach dem Drehen noch zu einer Tropfenform umzuformen.

Zum Beispiel besteht der Kleber aus gleichen Teilen der Komponenten A + B. Komponente A hat beispielsweise eine Viskosität von 1.000 mPas. Komponente B ist beispielsweise in Viskositäten von 150 - 20.000 mPas kommerziell verfügbar. Damit lässt sich eine Gesamtviskosität des Gesamtsystems zwischen ca. 300 und 10.000 mPas einstellen. Dies ist für den Verlauf des Klebematerials, insbesondere nach dem Fügen der Komponenten von entscheidender Bedeutung.

Gemäß zumindest einer Ausführungsform weist im ausgehärteten Zustand die transparente Klebeschicht eine Schichtdicke von wenigstens 0,2 mm und höchstens 1,5 mm auf. Insbesondere kann eine derartige Schichtdicke mit einer hier beschriebenen Viskosität von wenigstens 300 mPas und höchstens 10.000 mPas erreicht sein. Mit anderen Worten ermöglicht eine derartige Schichtdicke möglichst geringe Brechungsverluste beim Übergang der elektromagnetischen Strahlung von der Displayeinheit durch die Klebeschicht und die Eingabeeinheit hindurch.

Erfindungsgemäß sind in den aushärtbaren, transparenten Kleber transparente Füllkörper eingebracht, wobei die Füllkörper eine Kantenlänge von wenigstens 0,2 mm und höchstens 0,5 mm aufweisen. Dazu können die Füllkörper in das Material des transparenten Klebers zugemischt sein und gleichzeitig mit dem Material des Klebers auf die Verbindungsoberfläche der Displayeinheit aufgebracht werden. Insbesondere können die transparenten Füllkörper mit dem gleichen Material gebildet sein wie der aushärtebare, transparente Kleber. Mit anderen Worten bilden die transparenten Füllkörper in das Material des transparenten Klebers integrierte Abstandshalter für die Eingabeeinheit. Die transparenten Füllkörper sind daher nach dem Aufbringen des Klebers zwischen der Eingabeeinheit und der Displayeinheit angeordnet und beabstanden daher beide voneinander. Insofern kann besonders einfach durch derartige in den transparenten Kleber integrierte Füllkörper eine Schichtdicke eingestellt werden. Insbesondere können die transparenten Füllkörper würfel- und/oder quaderförmig ausgebildet sein. Die Füllkörper, welche im vorliegenden Ausführungsbeispiel Abstandhalter sind, können besonders einfach durch ein Gießen des Materials der späteren Füllkörper in einer gewünschten Schichtdicke zwischen zwei nicht haftenden Glas- oder Kunststoffplatten erreicht werden. Mit dem gleichen Ziel der Sicherstellung der Klebeschichtdicke können Folienabschnitte aus schon ausgehärtetem Klebematerial in der gewünschten Schichtdicke verwendet werden.

Erfindungsgemäß wird vor dem Aufbringen des transparenten Klebers auf die Verbindungsoberfläche die Verbindungsoberfläche und/oder die Auflagefläche mittels eines UV-aushärtbaren Dichtmittels abgedichtet. Vorteilhaft wird so vermieden, dass der transparente Kleber beim Auftragen beispielsweise in unerwünschter Art und Weise in eventuell vorhandene Öffnungen oder Hohlräume über die Verbindungsoberfläche in das Display eindringen kann. Insofern kann das Dichtmittel ansonsten von dem transparenten Kleber verursachte strukturelle Schädigungen vermeiden.

Gemäß zumindest einer Ausführungsform wird nach dem Zusammenfügen der Displayeinheit und der Eingabeeinheit die transparente Klebeschicht mittels Temperatureinstrahlung und/oder UV-Bestrahlung ausgehärtet. Ein derartiges Aushärtungsverfahren ist besonders zeitsparend und kostengünstig realisierbar, da auf beispielsweise zusätzliche Aushärtemittel zum Aushärten des transparenten Klebers verzichtet werden kann.

Erfindungsgemäß ist auf der Verbindungsoberfläche der Displayeinheit und/oder auf der Auflagefläche der Eingabeeinheit zumindest ein Abdichtungsmittel angeordnet, welches in horizontaler Richtung, nach dem Zusammenfügen, den Klebebereich zumindest stellenweise seitlich begrenzt. "Horizontale Richtung" heißt in diesem Zusammenhang eine Richtung in der Haupterstreckungsrichtung der Displayeinheit und/oder der Eingabeeinheit. Werden die Displayeinheit und die Eingabeeinheit zusammengefügt, wird der flüssige oder noch zähflüssige Kleber zwischen diesen beiden Einheiten zusammengepresst und in horizontaler Richtung herausgequetscht. Damit der gequetschte Kleber während des Zusammenfügens nicht seitlich von der Eingabeeinheit und/oder der Displayeinheit heraustritt, kann das Abdichtungsmittel in der horizontalen Richtung eine Ausbreitung des Klebers in dieser Richtung begrenzen. Zudem kann dieses Abdichtungsmittel als ein Abstandshalter zum Beabstanden der Eingabeeinheit und der Displayeinheit wirken. Denkbar ist, dass das Abdichtungsmittel in diesem Fall eine vertikale Ausdehnung, das heißt eine Ausdehnung in Richtung senkrecht zu einer Haupterstreckungsebene der Eingabeeinheit und/oder der Displayeinheit, aufweist, welche der gewünschten Schichtdicke der späteren Klebeschicht entspricht. Ein derartiges Abdichtungsmittel kann daher als ein Formgeber für die Ausdehnung und die Schichtdicke der späteren Klebeschicht dienen. Insbesondere können das Abdichtungsmittel und der Kleber jeweils mit einem optisch identischen Material gebildet sein. "Optisch identisches Material" heißt, dass diese Materialien, sofern es sich nicht um identische Materialien handelt, im Hinblick auf ihre optischen Eigenschaften gleich sind.

Erfindungsgemäß handelt es sich bei dem Abdichtungsmittel um einen UV-aushärtebaren Abstandsdamm. Insbesondere können der Abstandsdamm und die Klebeschicht mit dem gleichen Material gebildet sein. Der Abstandsdamm kann dann in horizontaler Richtung rahmenförmig um den Klebebereich herum auf beispielsweise der Auflagefläche der Eingabeeinheit angeordnet sein. Auch kann der Abstandsdamm mit strukturviskosem einkomponentigen Silikon (auch 1-K-Silikon) (auch nicht ausgehärtet) gebildet sein.

Gemäß zumindest einer Ausführungsform handelt es sich bei dem Abdichtungsmittel um einen Abstandsrahmen oder das Abdichtungsmittel ist mit einem an der Verbindungsfläche der Displayeinheit angeordneten Abstandsrahmen mechanisch fest verbunden, wobei der Abstandsrahmen den Klebebereich nach dem Zusammenfügen in horizontaler Richtung vollständig umrandet. Ein derartiger Abstandsrahmen kann daher ein hermetischer Schutz sein, welcher beispielsweise luftdicht nach dem Zusammenfügen zwischen der Displayeinheit und der Eingabeeinheit angeordnet ist.

Ist nun der Abstandsrahmen fest auf der Verbindungsoberfläche der Displayeinheit angeordnet, war es bisher üblich, die Displayeinheit von oben der Eingabeeinheit zuzuführen und im Verfahrensschritt des Zusammenfügens mit Hilfe eines mitunter aufwendigen Vakuumschrittes das Einfangen von später sichtbaren Luftblasen durchzuführen. Mittels des hier beschriebenen Verfahrens kann jedoch vorteilhaft auf einen derart aufwendigen Vakuumschritt verzichtet werden, da Luftblasen bereits durch die hier beanspruchte spezielle Ausformung des Klebers zu einer Tropfenform vollständig vermieden werden.

Gemäß zumindest einer Ausführungsform weist die Displayeinheit eine Krümmung auf, wobei auf der gekrümmten Verbindungsoberfläche der transparente Kleber aufgebracht wird. Es hat sich beispielsweise gezeigt, dass überraschenderweise mit einem hier beschriebenen Kleber, welcher mit dem hier beschriebenen Zwei-Komponenten-Silikon gebildet sein kann, ein Zusammenfügen zwischen der gekrümmten Displayeinheit und der Eingabeeinheit als besonders einfach und rissfest erweist.

Beispielsweise zeigen UV-härtebare Acrylate eine Schrumpfung von bis zu sieben Prozent ihrer Volumenausdehnung bei einer Aushärtung. Dies kann zu sichtbaren Veränderungen des Anzeigebildes durch Verwerfungen an einer Displayoberfläche führen.

Denkbar ist, dass auf einer zunächst ebenen Displayeinheit ein Abstandsrahmen auf der Verbindungsoberfläche angeordnet wird, welcher bereits auf die Dimensionen und eine Krümmung eingestellt ist, welche später in die ebene Displayeinheit eingebracht wird. Beispielsweise wird so das zunächst ebene Display an den Abstandsrahmen durch Ausbildung einer Krümmung in die Displayeinheit an den Rahmen angepasst. Alternativ dazu kann statt des Abstandsrahmens der hier beschriebene Abstandsdamm beispielsweise gebildet mit einem strukturviskosen Dichtungsmaterial (zum Beispiel einem einkomponentigen Silikon) in genau solchen Dimensionen und Abmessungen zur Anwendung kommen. Ein Aushärten der Klebeschicht erfolgt dann in einer Stellung, in der die Displayeinheit oben ist. Das heißt, dass während des Aushärtens die Displayeinheit über der Eingabeeinheit angeordnet ist. Dies verhindert ein Durchbiegen der Displayoberfläche aufgrund des hydrostatischen Drucks des aushärtenden Klebers (Vermeidung eines unerwünschten Linseneffekts).

Es wird darüber hinaus eine Displayvorrichtung angegeben. Beispielsweise kann mittels des hier beschriebenen Verfahrens, wie es in Verbindung mit einem oder mehreren der oben genannten Ausführungsformen beschrieben ist, eine hier beschriebene Displayvorrichtung hergestellt werden. Das heißt, die für das hier beschriebene Verfahren aufgeführten Merkmale sind auch für die hier beschriebene Displayvorrichtung offenbart und umgekehrt.

Gemäß zumindest einer Ausführungsform umfasst die Displayvorrichtung eine Displayeinheit sowie eine Eingabeeinheit, wobei in vertikaler Richtung zwischen der Displayeinheit und der Eingabeeinheit zumindest eine transparente, ausgehärtete Klebeschicht angeordnet ist. Dabei ist die transparente, ausgehärtete Klebeschicht luftblasenfrei. Eine derartige Displayvorrichtung weist die bereits eingangs beschriebenen Vorteile auf.

Im Folgenden werden das hier beschriebene Verfahren sowie die hier beschriebene Displayvorrichtung anhand von Ausführungsbeispielen und den dazugehörigen Figuren näher erläutert.

Die Figur 1 zeigt ein erfindungsgemäßes Verfahrensflussdiagramm zur Herstellung eines Ausführungsbeispiels einer hier beschriebenen Displayvorrichtung.

Die Figuren 2 bis 4 zeigen einen Verfahrensablauf zur Herstellung einer hier beschriebenen Displayvorrichtung.

Die Figuren 5A und 5B zeigen in perspektivischen Ansichten ein weiteres, erfindungsgemäßes Ausführungsbeispiel eines hier beschriebenen Verfahrens.

Die Figur 6 zeigt ein Ausführungsbeispiel einer hier beschriebenen Displayvorrichtung.

Die Figuren 7A bis 7D zeigen in schematischen Drauf- und Seitenansichten ein erfindungsgemäßes Ausführungsbeispiel einer hier beschriebenen Display- sowie eine hier beschriebenen Eingabeeinheit.

In den Ausführungsbeispielen und in den Figuren sind gleiche oder gleich wirkende Bestandteile jeweils mit den gleichen Bezugszeichen versehen. Die dargestellten Elemente sind nicht als maßstabsgerecht anzusehen, vielmehr können einzelne Elemente zum besseren Verständnis übertrieben groß dargestellt sein.

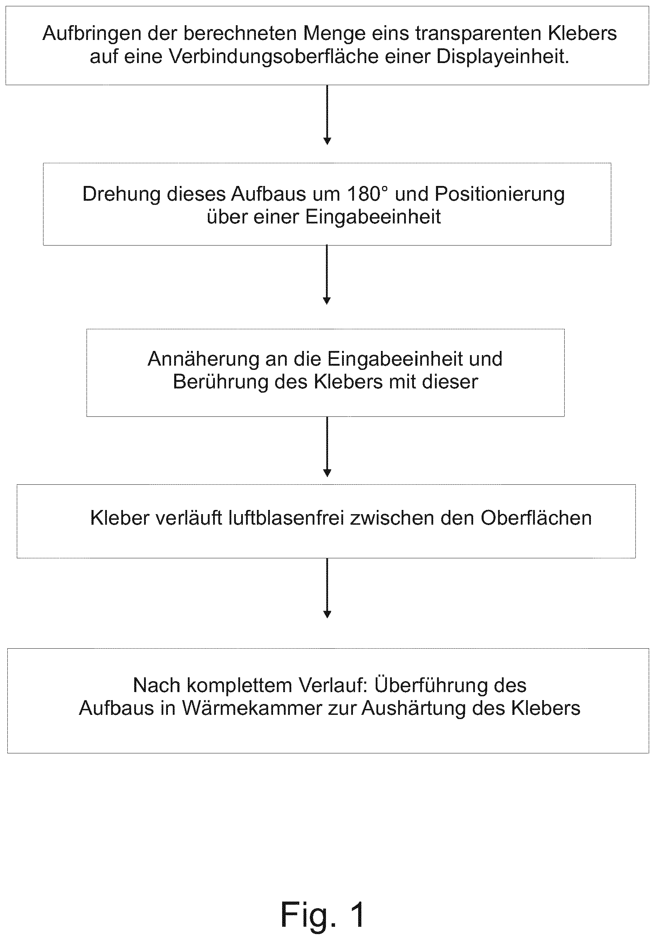

In der Figur 1 ist ein schematisches Verfahrensablaufdiagramm dargestellt, bei dem eine zuvor berechnete Menge eines aushärtebaren, transparenten Klebers 1 auf eine Verbindungsoberfläche 31 einer Displayeinheit 3 aufgebracht wird, um eine Klebeschicht 11 zu bilden.

In einem nächsten Schritt wird die Displayeinheit 3 um 180° um eine Wendeachse W gedreht, wobei nach dem Drehen der Displayeinheit 3 die transparente Klebeschicht 11 nach unten zeigt und nach einer Umformung und einem zumindest teilweisen, durch die Schwerkraft verursachten Zusammenziehens der transparenten Klebeschicht 11, zu einer Tropfenform, die Verbindungsoberfläche 31 und die darauf aufgebrachte transparente Klebeschicht 11 auf einer Auflagefläche 51 einer Eingabeeinheit 5 zusammengefügt werden. Durch die Einwirkung der Schwerkraft wird die Displayeinheit 3 auf die darunterliegende Eingabeeinheit 5 aufgepresst, wobei sich durch das Aufpressen die zwischen der Eingabeeinheit 5 und der Displayeinheit 3 angeordnete, transparente Klebeschicht 11 luftblasenfrei auf einem vorgebbaren Klebebereich 52 der Eingabeeinheit 5 verteilt. In einem letzten Schritt wird der komplette Aufbau in eine Wärmekammer zur Aushärtung der transparenten Klebeschicht 11 gegeben. Nach dem Aushärten ist eine hier beschriebene Displayvorrichtung 100 gefertigt.

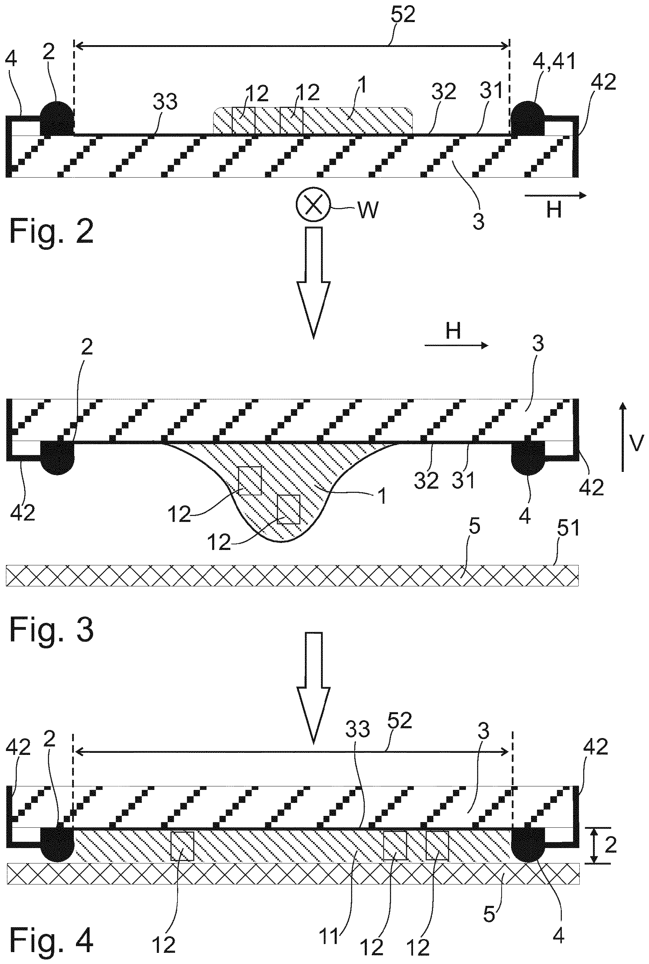

In der Figur 2 ist ein konkretes Ausführungsbeispiel einer hier beschriebenen Displayeinheit 3 gezeigt, auf welcher auf die Verbindungsoberfläche 31, an einer Oberseite 32, der aushärtebare, transparente Kleber 1 in noch flüssiger oder zähflüssiger Form aufgebracht ist. Zudem ist auf der Verbindungsoberfläche 31 ein transparentes UV-aushärtbares Dichtmittel 33 aufgebracht, welches in horizontaler Richtung H den Klebebereich 52 eingrenzt. Alternativ oder zusätzlich handelt es sich erfindungsgemäß bei dem Dichtmittel 32 um z.B. ein kondensationsvernetzendes aushärtbares Mittel (Ein-Komponente). Darüber hinaus ist ein Abdichtungsmittel 4, vorliegend in Form eines UV-aushärtebaren Abstandsdammes 41, auf der Verbindungsoberfläche 31 aufgebracht und wird von einem Abstandsrahmen 42 seitlich berandet und ist mit diesem mechanisch fest verbunden. Der Abstandsrahmen 42 ist wiederum mit Seitenflächen der Displayeinheit 3 und an diesen fest mit der Displayeinheit 3 verbunden. Insofern kann der Abstandsrahmen 42 zu einer weiteren Fixierung des Abdichtungsmittels 4 führen.

In der Figur 3 ist gezeigt, wie nach einer Drehung der Displayeinheit 3 um die Wendeachse W um einen Winkel von 180 Grad sich der flüssige oder noch zähflüssige Kleber 1 in Form eines Tropfens zentrisch über einer in vertikaler Richtung V unter der Displayeinheit 3 bereitgestellten Eingabeeinheit 5, vorliegend einem Deckglas, sammelt.

Nach dem Zusammenfügen der Displayeinheit 3 mit der Eingabeeinheit 5 verteilt sich der flüssige oder noch zähflüssige, transparente Kleber 1 luftblasenfrei, bis er durch den Abstandsdamm 41 in horizontaler Richtung H und durch die Displayeinheit 3 und die Eingabeeinheit 5 in vertikaler Richtung V in seiner Ausdehnung begrenzt wird (siehe Figur 4). Dabei ist die Displayeinheit 3 von der Eingabeeinheit 5 durch in den transparaten Kleber 1 eingebrachte, transparente Füllkörper 12 beanstandet. Insbesondere kann somit eine vorgebbare Schichtdicke von wenigstens 0,2 mm bis höchstens 1,5 mm, zum Beispiel von 0,8 mm, einfach eingestellt werden. Vorliegend sind sowohl die transparenten Füllkörper 12, die transparente Klebeschicht 11 und der Abstandsdamm 41 mit dem gleichen Material gebildet.

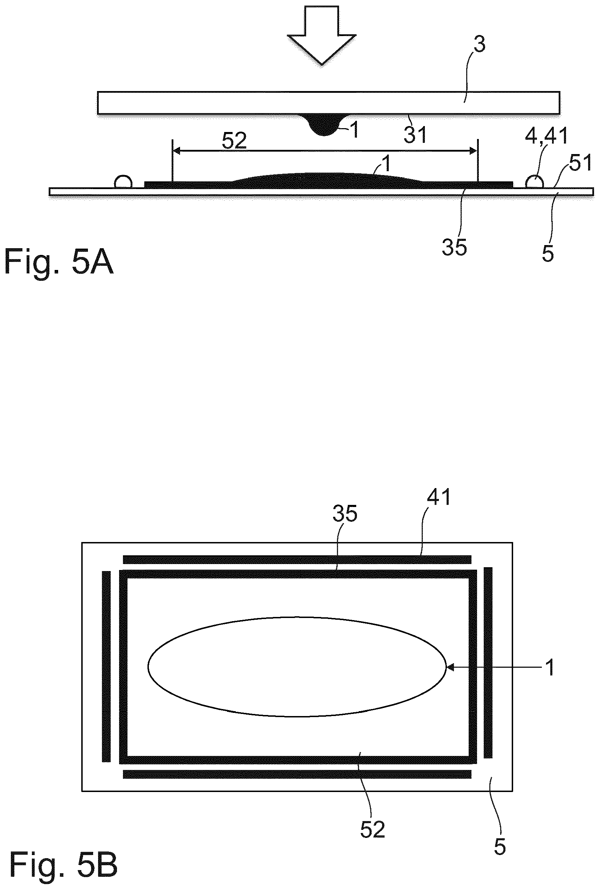

In der Figur 5A ist im Unterschied zu obig gezeigtem Ausführungsbeispiel gemäß den Figuren 2 bis 4 zunächst auf der Auflagefläche 51 der Eingabeeinheit 5 ein Rahmenelement 35, vorliegend eine Folie, angeordnet. Das Rahmenelement 35 umrandet den Klebebereich 52 in horizontaler Richtung H vollständig (siehe auch Figur 5B). Mittels dieses Rahmenelements 35 kann während des Zusammenfügens der sich innerhalb des Klebebereichs 52 ausbreitende transparente Kleber 1 besonders einfach eingegrenzt werden. Zudem ist bereits vor dem Zusammenfügen auf den Klebebereich 52 eine zusätzliche Menge des transparenten Klebers 1 aufgebracht.

Die Figur 5B zeigt die in der Figur 5A gezeigte Displayvorrichtung 100 zunächst ohne die Displayeinheit 3, so dass in einer derartigen Draufsicht besonders gut die Anordnung des Abdichtungsmittels 4 in Form des Abstandsdammes 41 sowie das Rahmenelement 35 dargestellt sind.

Das dargestellte Verfahren ermöglicht das luftblasenfreie Fügen der Komponenten ohne die Überführung des Aufbaus in eine Vakuumkammer. Darüber hinaus verhindert die Vorgehensweise entsprechend des hier aufgezeigten Verfahrens das ungewünschte Durchbiegen der Displayeinheit durch die Einwirkung des Gewichts des Klebstoffs.

Insofern können Verfahrensschritte zum Bonden beispielsweise eines TFT-Displays mit einem Schutzglas oder der Kombination aus einem Touchträger und einem Schutzglas folgender Maßen zusammengefasst werden:
1) Abdichtung des TFT-Displays mit Hilfe eines UV-aushärtbaren Silikons (wie es beispielsweise von der Firma Momentive angeboten wird), das nach Aufbringen (maschinellem Dosieren) desselben per UV-Licht oder per Raumtemperatur beispielsweise innerhalb von 24 Stunden ausgehärtet wird oder aushärtbar ist.
2) Maschinelles Dosieren des Klebesystems 2-Komponenten Silikon vorzugsweise auf das Display (andere Erfinder beschreiben das Aufbringen auf die Gegenseite) nach einem speziellen Muster
3) Maschinelles Fügen der zu verbindenden Teile mit der Maßgabe, dass das Display "oben" liegt.
4) Aushärtung (bei erhöhter Temperatur bzw. durch Kombination von UV-Strahlung/Aktivierung und Temperatur)

Erfinderisch ist auch die Kombination zweier unterschiedliche Klebesysteme (1. UVhärtendes Silikonsystem, 2. Additiv vernetzendes Silikonsystem), was eine gute Ausbeute und kurze Taktzeiten im automatischen Prozess ermöglicht. Die Komptabilität der beiden Systeme (Aushärtung beider Systeme bei direktem Kontakt) ist in dieser Erfindung gegeben.

Erfinderisch ist auch, dass hier das Display als Klebstoffträger verwendet wird und dieser im sog. Fügeprozess um 180 Grad gedreht wird, was ein Durchbiegen desselben durch Schwerkrafteinflüsse verhindert. Ein solches Durchbiegen führt zu nicht akzeptablen Schwankungen in der Schichtdicke der Klebung (Linseneffekt).

Zudem kann die Schichtdicke der Verklebung erreicht werden durch eine genaue Einstellung der Viskosität des 2-Komponenten-Klebesystems (zum Beispiel wenigstens 0,2 und höchstens 1,5 mm Klebeschichtdicke bei einer Viskosität von wenigstens 300 und höchstens 10.000 mPas)

Erfindungsgemäß ist eine gewünschte Schichtdicke zudem dadurch erreicht, dass anstatt Glas- oder Polymerperlen (siehe auch Stand der Technik) würfelförmige oder quaderförmige, ausgehärtete Kleberformstücke, also die transparenten Füllkörper, aus dem (Silikon-) Klebstoff im Dosierschritt eingebracht werden. Hiermit ist ein Unterschied zwischen Brechungsindizes Festkörper/Klebstoff ausgeschlossen.

Die Herstellung der Displayeinheit nach dem zuvor beschriebenen Verfahren ermöglicht eine deutlich gesteigerte Qualität des Bildschirminhalts, ohne dass es einer teuren und aufwändigen Fertigungslinie bedarf.

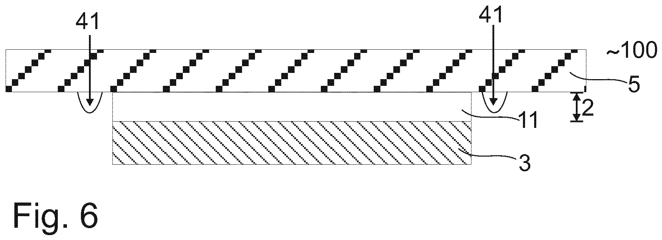

In der Figur 6 ist in einer schematischen Seitenansicht ein Ausführungsbeispiel einer hier beschriebenen Displayvorrichtung 100 gezeigt, bei der zwischen der Displayeinheit 3 und der Eingabeeinheit 5 die hier beschriebene, transparente Klebeschicht 11 angeordnet ist. Mittels des hier beschriebenen Verfahrens kann daher die hier beschriebene Displayvorrichtung 100 besonders einfach, kostengünstig und mit wenig Zeitaufwand hergestellt werden. Zudem weist eine mittels des hier beschriebenen Verfahrens hergestellte Displayvorrichtung 100 keinerlei Lufteinschlüsse auf und bildet daher eine Displayvorrichtung 100 mit besonders hoher optischer Brillanz.

Insbesondere ist bei der Auswahl eines geeigneten Klebersystems aus einem UV-härtbaren Acryl-basierten System bzw. einem additiv (wärme-)vernetzenden Silikon-Klebesystem dabei Folgendes zu beachten:
a) UV-härtbares Acryl-basiertes System: Unregelmäßigkeiten wie Luftblasen im Verklebeprozess müssen jedoch hier vor dem Schritt der UV-Härtung erkannt und ausgeschleust werden, um die teuren Ausgangsmaterialien zu retten.
b) Additiv (wärme-)vernetzendes Silikon-Klebesystem: auch beim Einsatz dieser Klebesysteme empfiehlt sich eine Kontrolle und ein Ausschleusen fehlerhafter Aufbauten vor der Aushärtung. Jedoch sind die mechanischen Eigenschaften dieser Klebesysteme so eingestellt, dass eine Aufarbeitung der Ausgangsmaterialien durch mechanisches Trennen auch nach der Aushärtung möglich ist. Dieser Vorteil spielt auch im Falle von Reklamationen eine große Rolle.

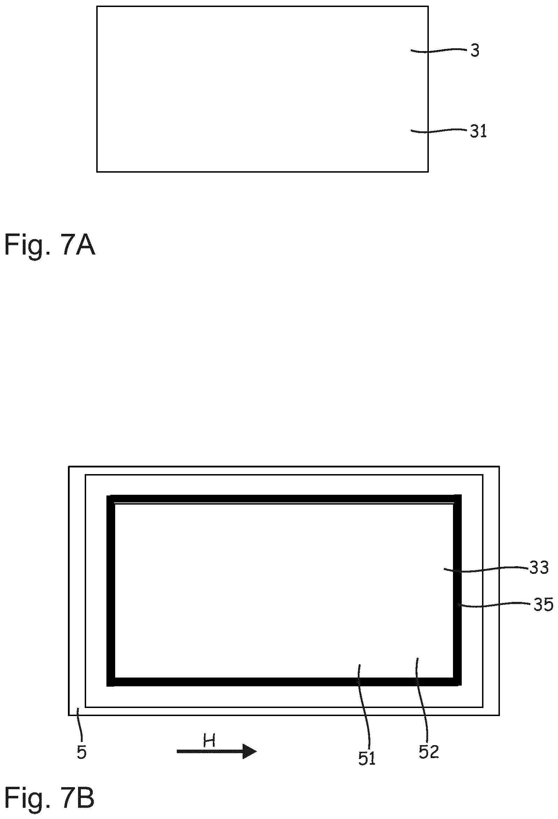

In der Figur 7A ist in einer schematischen Draufsicht ein weiteres Ausführungsbeispiel einer hier beschriebenen und erfindungsgemäßen Displayeinheit 3 aufweisend eine Verbindungsoberfläche 31 gezeigt.

In der Figur 7B ist in einer schematischen Draufsicht gezeigt, wie auf eine Auflagefläche 51 einer Eingabeeinheit 5 zunächst erfindungsgemäß ein UV-aushärtebares Dichtmittel 33 angeordnet ist, um die Auflagefläche 51 vor einem auf die Auflagefläche 51 aufzubringenden, transparenten Kleber 1 abzudichten. Auf das Dichtmittel 33 ist ein Rahmenelement 35 angeordnet, welches in horizontaler Richtung H einen Klebebereich 52 definiert. Alternativ oder zusätzlich kann es sich bei dem Dichtmittel 32 um z.B. ein kondensationsvernetzendes aushärtbares Mittel handeln (Ein-Komponente).

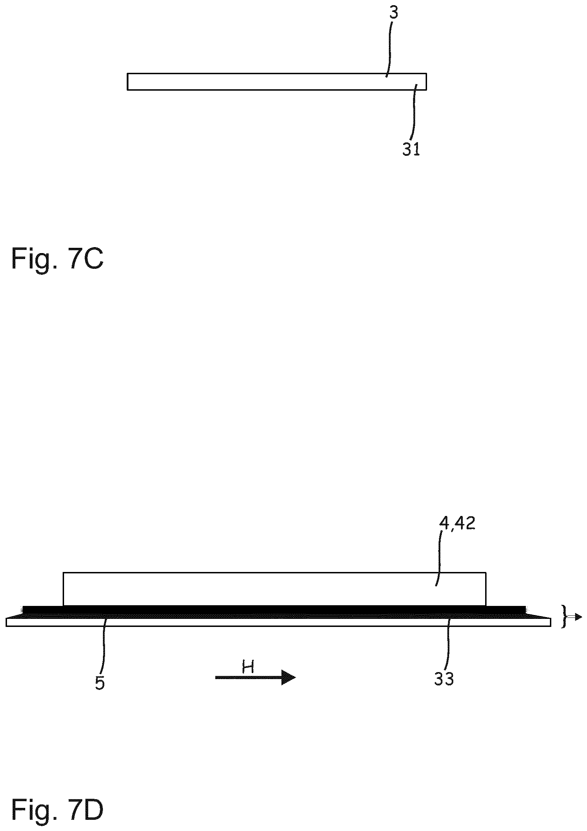

Die Figuren 7C und 7D zeigen in schematischen Seitenansichten die jeweils in den Figuren 7A und 7B gezeigte Displayeinheit 3 bzw. Eingabeeinheit 5 und das auf dem Rahmenelement 35 und das auf diesem mechanisch fest angeordnete Abdichtungsmittel 4, welches vorliegend in Form eines Abstandsrahmens 42 ausgebildet ist. Alternativ hierzu kann das Abdichtungsmittel 4 in Form eines Abstandsdamms 41 ausgebildet sein.

### Bezugszeichenliste

- H: Horizontale Richtung H
- V: Vertikale Richtung V
- 1: Kleber
- 2: Schichtdicke
- 3: Displayeinheit
- 4: Abdichtungsmittel
- 5: Eingabeeinheit
- 11: Klebeschicht
- 12: Füllkörper
- 31: Verbindungsoberfläche
- 32: Oberseite
- 33: UV-aushärtebares Dichtmittel
- 41: Abstandsdamm
- 42: Abstandsrahmen
- 51: Auflagefläche
- 52: Klebebereich
- 100: Displayvorrichtung

## Patentansprüche

1. Verfahren zur durchsichtigen Verklebung von transparenten Schichten, bei dem ein aushärtbarer, transparenter Kleber (1) bereitgestellt wird,
**dadurch gekennzeichnet, dass**
in einem ersten Schritt der transparente Kleber (1) in noch flüssiger oder zähflüssiger Phase auf eine Verbindungsoberfläche (31) an einer Oberseite (32) einer Displayeinheit (3) aufgebracht wird, um eine transparente Klebeschicht (11) zu formen;
in einem nächsten Schritt die Displayeinheit (3) um 180 Grad um eine Wendeachse gedreht wird, wobei nach dem Drehen der Displayeinheit (3) die transparente Klebeschicht (11) nach unten zeigt, und nach einer Umformung und einem zumindest teilweise durch die Schwerkraft verursachtes Zusammenziehen der transparenten Klebeschicht, zu einer Tropfenform, die Verbindungsoberfläche (31) und die darauf aufgebrachte transparente Klebeschicht (11) auf einer Auflagefläche (51) einer Eingabeeinheit (5) zusammengefügt werden, wobei
durch Einwirkung der Schwerkraft die Displayeinheit (3) auf die darunterliegende Eingabeeinheit (5) aufgepresst wird, und sich durch das Aufpressen, die zwischen der Eingabeeinheit (5) und der Displayeinheit (3) angeordnete, transparente Klebeschicht (11), luftblasenfrei auf einem vorgebbaren Klebebereich (52) der Eingabeeinheit (5) verteilt, wobei
auf der Verbindungsoberfläche (31) der Displayeinheit (3) und/oder auf der Auflagefläche (51) der Eingabeeinheit (5) zumindest ein Abdichtungsmittel (4) angeordnet ist, welches in horizontaler Richtung (H), nach dem Zusammenfügen, den Klebebereich (52) zumindest stellenweise seitlich begrenzt, und wobei
es sich bei dem Abdichtungsmittel (4) um einen UV-aushärtbaren Abstandsdamm (41) handelt, wobei
in den aushärtbaren, transparenten Kleber (1) transparente Füllkörper (12) eingebracht sind, wobei die transparenten Füllkörper (1) würfel- und/oder quaderförmig ausgebildet sind und eine Kantenlänge von wenigstens 0,2 mm und höchstens 0,5 mm aufweisen, wobei vor dem Aufbringen des transparenten Klebers (1) auf die Verbindungsoberfläche (31), die Verbindungsoberfläche (31) und/oder die Auflagefläche (51) mittels eines transparentes UV- aushärtbaren Dichtmittels (33) oder mittels eines kondensationsvernetzenden aushärtbaren Dichtmittels (33) abgedichtet wird.

2. Verfahren nach einem der vorhergehenden Ansprüche,
**dadurch gekennzeichnet, dass**
im ausgehärteten Zustand die transparente Klebeschicht (11) eine Schichtdicke (2) von wenigstens 0,2 mm und höchstens 1,5 mm aufweist.

3. Verfahren nach Anspruch 2,
**dadurch gekennzeichnet, dass**
in den aushärtbaren, transparenten Kleber (1) transparente Füllkörper (12) eingebracht sind oder diese nach oder vor dem Aufbringen des transparenten Klebers auf den Klebebereich (51) angeordnet werden, wobei die transparenten Füllkörper (1) würfel- und/oder quaderförmig ausgebildet sind und eine Kantenlänge von wenigstens 0,2 mm und höchstens 0,5 mm aufweisen.

4. Verfahren nach einem der vorhergehenden Ansprüche,
**dadurch gekennzeichnet, dass**
nach dem Zusammenfügen der Displayeinheit (3) und der Eingabeeinheit (5) die transparente Klebeschicht (11) mittels Temperatureinstrahlung und/oder UV-Bestrahlung ausgehärtet wird.

5. Verfahren nach zumindest einem der vorhergehenden Ansprüche,
**dadurch gekennzeichnet, dass**
es sich bei dem Abdichtungsmittel (4) um einen Abstandsrahmen (42) handelt oder das Abdichtungsmittel (4) mit einem Abstandsrahmen (42) an der Verbindungsoberfläche (31) der Displayeinheit (3) mechanisch fest verbunden ist, wobei der Abstandrahmen (42) den Klebebereich (51) nach dem Zusammenfügen in horizontaler Richtung (H) vollständig umrandet.

6. Verfahren nach einem der vorhergehenden Ansprüche,
**dadurch gekennzeichnet, dass**
die Displayeinheit (3) eine Krümmung aufweist, wobei auf der gekrümmten Verbindungsoberfläche (31) der transparente Kleber (1) aufgebracht wird.

7. Displayvorrichtung (100), umfassend eine Displayeinheit (3) sowie eine Eingabeeinheit (5), wobei in vertikaler Richtung (V) zwischen der Displayeinheit (3) und der Eingabeeinheit (5) zumindest eine transparente, ausgehärtete Klebeschicht (11) angeordnet ist,
**dadurch gekennzeichnet, dass**
die transparente, ausgehärtete Klebeschicht (11) luftblasenfrei ist und die Displayvorrichtung mittels eines Verfahrens gemäß Anspruch 1 oder Anspruch 2 hergestellt ist.

## Claims

1. Method for transparent bonding of transparent layers, in which a hardenable, transparent adhesive (1) is provided,
**characterised in that**,
in a first step, the transparent adhesive (1) is applied, in a phase in which it is still liquid or viscous, to a bonding surface (31) on an upper face (32) of a display unit (3) in order to form a transparent adhesive layer (11);
in a next step, the display unit (3) is rotated by 180° about a turning axis, the transparent adhesive layer (11) pointing downwards after the display unit (3) has been rotated, and, after deformation and shrinkage of the transparent adhesive layer, which shrinkage is caused at least in part by gravitational force, into a drop shape, the bonding surface (31) and the transparent adhesive layer (11) applied thereon are joined together on a contact surface (51) of an input unit (5),
the display unit (3) being pressed, by the action of gravitational force, onto the input unit (5) located thereunder, and, by means of the pressing action, the transparent adhesive layer (11) arranged between the input unit (5) and the display unit (3) being spread out, without air bubbles, on a predefinable adhesive region (52) of the input unit (5),
at least one sealing means (4) being arranged on the bonding surface (31) of the display unit (3) and/or on the contact surface (51) of the input unit (5), which sealing means laterally confines the adhesive region (52), at least at points, in the horizontal direction (H) following the joining process, and
the sealing means (4) being a UV-hardenable spacer dam (41),
transparent filler bodies (12) being inserted into the hardenable, transparent adhesive (1), the transparent filler bodies (1) being cuboid and/or rectangular and having an edge length of at least 0.2 mm and at most 0.5 mm, the bonding surface (31) and/or the contact surface (51) being sealed by means of a transparent UV-hardenable sealant (33) or by means of a condensation crosslinking hardenable sealant (33) before the transparent adhesive (1) is applied to the bonding surface (31).

2. Method according to the preceding claim,
**characterised in that**,
when hardened, the transparent adhesive layer (11) has a layer thickness (2) of at least 0.2 mm and at most 1.5 mm.

3. Method according to claim 2, **characterised in that** transparent filler bodies (12) are inserted into the hardenable, transparent adhesive (1) or said bodies are arranged on the adhesive region (51) after or before the transparent adhesive is applied, the transparent filler bodies (1) being cuboid and/or rectangular and having an edge length of at least 0.2 mm and at most 0.5 mm.

4. Method according to any of the preceding claims,
**characterised in that**,
after the display unit (3) and the input unit (5) have been joined together, the transparent adhesive layer (11) is hardened by means of temperature irradiation and/or UV radiation.

5. Method according to at least one of the preceding claims,
**characterised in that**
the sealing means (4) is a spacer frame (42) or the sealing means (4) is mechanically rigidly connected, together with a spacer frame (42), to the bonding surface (31) of the display unit (3), the spacer frame (42) bordering the entirety of the adhesive region (51) in the horizontal direction (H) after the joining process.

6. Method according to any of the preceding claims,
**characterised in that**
the display unit (3) is curved, the transparent adhesive (1) being applied to the curved bonding surface (31).

7. Display device (100), comprising a display unit (3) and an input unit (5), at least one transparent, hardened adhesive layer (11) being arranged, in the vertical direction (V), between the display unit (3) and the input unit (5),
**characterised in that**
the transparent, hardened adhesive layer (11) is free of air bubbles and the display device is produced by means of a method according to either claim 1 or claim 2.

## Revendications

1. Procédé pour le collage transparent de couches transparentes, dans lequel un adhésif transparent (1), durcissable, est fourni,
**caractérisé par le fait que**
dans une première étape, l'adhésif transparent (1) en phase encore liquide ou visqueuse est appliqué sur une surface de liaison (31) sur une face supérieure (32) d'une unité d'affichage (3), pour former une couche adhésive transparente (11) ; dans une étape suivante, l'unité d'affichage (3) est fait tournée de 180 degrés autour d'un axe de pivotement, où, après la rotation de l'unité d'affichage (3), la couche adhésive transparente (11) est tournée vers le bas, et, après une déformation et une contraction au moins partiellement provoquée par la gravité de la couche adhésive transparente, en une forme de goutte, la surface de liaison (31) et la couche adhésive transparente (11) appliquée sur celle-ci sont assemblées sur une surface de support (51) d'une unité d'entrée (5), où
sous l'effet de la gravité, l'unité d'affichage (3) est pressée sur l'unité d'entrée (5) située au-dessous, et par le pressage, la couche adhésive transparente (11) disposée entre l'unité d'entrée (5) et l'unité d'affichage (3) se répartit sans bulles d'air sur une zone adhésive prédéterminée (52) de l'unité d'entrée (5), où
sur la surface de liaison (31) de l'unité d'affichage (3) et/ou sur la surface de support (51) de l'unité d'entrée (5) est disposé au moins un moyen d'étanchéité (4), qui en direction horizontale (H), après l'assemblage, délimite latéralement au moins par endroits la zone adhésive (52) et où
le moyen d'étanchéité (4) est une barrière de séparation (41) durcissable sous l'action des UV, où
des corps de remplissage transparents (12) sont introduits dans l'adhésif transparent (1), durcissable, les corps de remplissage transparents (1) étant réalisés en forme de cubes et/ou de parallélipipèdes et présentant une longueur de côté d'au moins 0,2 mm et d'au plus 0,5 mm, où, avant l'application de l'adhésif transparent (1) sur la surface de liaison (31), la surface de liaison (31) et/ou la surface de support (51) sont rendues étanches à l'aide d'un moyen d'étanchéité (33) durcissable sous l'action des UV, transparent, ou bien à l'aide d'un moyen d'étanchéité (33) durcissable, réticulant par condensation.

2. Procédé selon l'une des revendications précédentes,
**caractérisé par le fait que**
dans l'état durci, la couche adhésive transparente (11) présente une épaisseur de couche (2) d'au moins 0,2 mm et d'au plus 1,5 mm.

3. Procédé selon la revendication 2,
**caractérisé par le fait que**
des corps de remplissage transparents (12) sont introduits dans l'adhésif transparent (1), durcissable, ou bien ceux-ci sont disposés après ou avant l'application de l'adhésif transparent sur la zone adhésive (51), les corps de remplissage transparents (1) étant réalisés en forme de cubes et/ou de parallélépipèdes et présentant une longueur de côté d'au moins 0,2 mm et d'au plus 0,5 mm.

4. Procédé selon l'une des revendications précédentes,
**caractérisé par le fait que**
après l'assemblage de l'unité d'affichage (3) et de l'unité d'entrée (5), la couche adhésive transparente (11) est durcie au moyen d'un rayonnement thermique et/ou d'un irridation UV.

5. Procédé selon l'une des revendications précédentes,
**caractérisé par le fait que**
le moyen d'étanchéité (4) est un cadre de séparation (42) ou bien le moyen d'étanchéité (4) est lié solidement de manière mécanique à un cadre de séparation (42) sur la surface de liaison (31) de l'unité d'affichage (3), le cadre de séparation (42) entourant complètement la zone adhésive (51) en direction horizontale (H) après l'assemblage.

6. Procédé selon l'une des revendications précédentes,
**caractérisé par le fait que**
l'unité d'affichage (3) présente un cintrage, l'adhésif transparent (1) étant appliqué sur la surface de liaison cintrée (31).

7. Dispositif d'affichage (100), comportant une unité d'affichage (3) ainsi qu'une unité d'entrée (5), où en direction verticale (V) entre l'unité d'affichage (3) et l'unité d'entrée (5), au moins une couche adhésive (11) durcissable, transparente, est disposée,
**caractérisé par le fait que**
la couche adhésive (11) durcissable, transparente, est exempte de bulles d'air et le dispositif d'affichage est obtenu au moyen d'un procédé selon la revendication 1 ou la revendication 2.
